# EUROPEAN PATENT APPLICATION

(11) **EP 4 534 924 A1**
(43) Date of publication of application: **09.04.2025**
(21) Application number: 23811506.7
(22) Date of filing: 18.04.2023
(51) Int. Cl.: F25B 1/00, F25B 49/02

(54) **REFRIGERATION CYCLE DEVICE**

(30) Priority: 24.05.2022 JP 2022084741
(71) Applicant: Panasonic Intellectual Property Management Co., Ltd., Kadoma-shi, Osaka 571-0057 (JP)
(72) Inventor: KUWABARA, Osamu, Kadoma-shi, Osaka 571-0057 (JP); HIWATA, Akira, Kadoma-shi, Osaka 571-0057 (JP)
(74) Representative: Eisenführ Speiser
(86) International application number: PCT/JP2023/015478
(87) International publication number: WO 2023/228628

(57) **Abstract**

It is provided a refrigeration cycle device enabling suppression of a disproportionation reaction of a working medium. A refrigeration cycle device (1) includes a control device (3) to control a refrigeration cycle circuit including a compressor (4) and allowing circulation of a working medium. The working medium contains ethylene-based fluoroolefin as a refrigerant component. The compressor (4) includes a sealed container (40) constituting a fluidic pathway for the working medium, and a compression mechanism (41) and an electric motor (42) positioned inside the sealed container (40). The control device (3) includes a drive circuit (31) to drive the electric motor (42), a detection circuit (32) to detect insulation deterioration of a winding of the electric motor (42), and a control circuit (33) having a first control mode for controlling the refrigeration cycle circuit under a first condition and a second control mode for controlling the refrigeration cycle circuit under a second condition lower in at least one of a maximum pressure or a highest temperature of the working medium at the compressor (4) than the first condition, and configured to select the second control mode when the detection circuit (32) has detected insulation deterioration of the winding of the electric motor (42).

## Description

### TECHNICAL FIELD

The present disclosure relates to a refrigeration cycle device.

### BACKGROUND ART

Conventionally, R410A has been widely used as a working medium (heat medium, refrigerant) for refrigeration cycle devices. However, the global warming potential (GWP) of R410A is as high as 2090. Therefore, from the viewpoint of preventing global warming, research and development of working media with smaller GWPs has been conducted. Patent Document 1 discloses 1,1,2-trifluoroethylene (HFO1123) as a working medium with a smaller GWP than R410A. Patent Document 2 discloses 1,2-difluoroethylene (HFO1132) as a working medium with a smaller GWP than R410A.

### PRIOR ART DOCUMENTS

### PATENT DOCUMENTS

Patent Document 1: WO 2012/157764 A1
Patent Document 2: WO 2012/157765 A1

### SUMMARY OF THE INVENTION

### PROBLEMS TO BE SOLVED BY THE INVENTION

In particular, HFO1123 and HFO1132 have a smaller GWP than R410A, but are therefore less stable than R410A. For example, the generation of radicals may cause a disproportionation reaction of HFO1123 or HFO1132, resulting in the conversion of HFO1123 and HFO1132 to other compounds.

The present disclosure provides a refrigeration cycle device enabling suppression of a disproportionation reaction of a working medium.

### SOLUTIONS TO THE PROBLEMS

A refrigeration cycle device in accordance with one aspect of the present disclosure includes: a refrigeration cycle circuit including a compressor, a condenser, an expansion valve and an evaporator, and allowing circulation of a working medium; and a control device configured to control the refrigeration cycle circuit. The working medium contains ethylene-based fluoroolefin as a refrigerant component. The compressor includes a sealed container constituting a fluidic pathway for the working medium, a compression mechanism positioned inside the sealed container to compress the working medium, and an electric motor positioned inside the sealed container to operate the compression mechanism. The control device includes a drive circuit configured to drive the electric motor, a detection circuit configured to detect insulation deterioration of a winding of the electric motor, and a control circuit having a first control mode for controlling the refrigeration cycle circuit under a first condition and a second control mode for controlling the refrigeration cycle circuit under a second condition lower in at least one of a maximum pressure or a highest temperature of the working medium at the compressor than the first condition, and configured to select the second control mode when the detection circuit has detected insulation deterioration of the winding of the electric motor.

### EFFECTS OF THE INVENTION

The present aspect enables suppression of a disproportionation reaction of a working medium.

### BRIEF DESCRIPTION OF THE DRAWINGS

[Fig. 1] Fig. 1 is a block diagram of a configuration example of a refrigeration cycle device in accordance with one embodiment.
[Fig. 2] Fig. 2 is a schematic diagram of configuration examples of a compressor and a control device of the refrigeration cycle device of Fig. 1.
[Fig. 3] Fig. 3 is a schematic diagram of configuration examples of an electric motor of the compressor and the control device of the refrigeration cycle device of Fig. 1.
[Fig. 4] Fig. 4 is a flowchart of one example of operation of a control circuit of the control device of Fig. 2.
[Fig. 5] Fig. 5 is a schematic diagram of configuration examples of a compressor and a control device of a refrigeration cycle device according to variation 1.
[Fig. 6] Fig. 6 is a schematic diagram of configuration examples of a compressor and a control device of a refrigeration cycle device according to variation 2.

### DETAILED DESCRIPTION

### [1. EMBODIMENTS]

Hereinafter, embodiments of the present disclosure will be described with reference to the drawings where appropriate. However, the following embodiments are merely examples for explaining the present disclosure, and are not intended to limit the present disclosure to the following content. Positional relationships such as up, down, left, and right are based on the positional relationships shown in the drawings, unless otherwise specified. Each figure described in the following embodiments is a schematic diagram, and the ratios of size and thickness of each component in each figure do not necessarily reflect the actual dimensional ratios. Furthermore, the dimensional ratios of each element are not limited to the ratios shown in the drawings.

Note that, in the following description, if it is necessary to distinguish a plurality of components from each other, prefixes, such as, "first", "second", or the like are attached to names of such components. However, if these components can be distinguished from each other by reference signs attached to those components, such prefixes, such as, "first", "second", or the like, may be omitted in consideration of readability of texts.

### [1.1 CONFIGURATIONS]

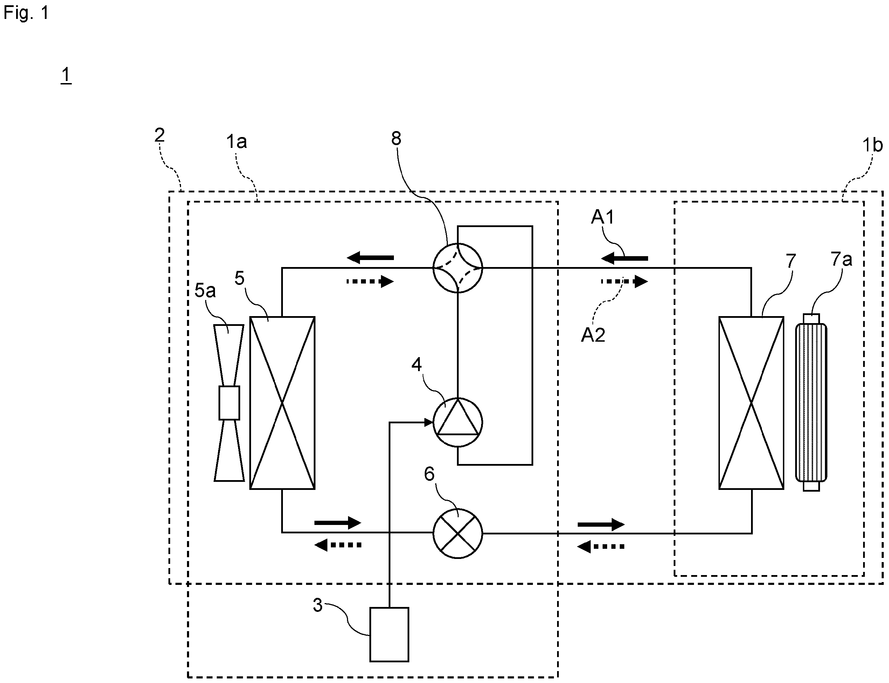

Fig. 1 is a block diagram of a configuration example of a refrigeration cycle device 1 in accordance with the present embodiment. The refrigeration cycle device 1 of Fig. 1 constitutes an air conditioner enabling a cooling operation and a heating operation, for example.

The refrigeration cycle device 1 of Fig. 1 includes a refrigeration cycle circuit 2 and a control device 3.

The refrigeration cycle circuit 2 constitutes a fluidic pathway where the working medium circulates. In the present embodiment, the working medium contains ethylene-based fluoroolefin as a refrigerant component. The ethylene-based fluoroolefin may be ethylene-based fluoroolefin likely to undergo a disproportionation reaction. Examples of the ethylene-based fluoroolefin likely to undergo a disproportionation reaction may include 1,1,2-trifluoroethylene (HFO1123), trans-1,2-difluoroethylene (HFO1132(E)), cis-1,2-difluoroethylene (HFO-1132(Z)), 1,1-difluoroethylene (HFO-1132a), tetrafluoroethylene (CF₂=CF₂, FO1114), or monofluoroethylene (HFO-1141).

The working medium may include a plurality of types of refrigerant components. The working medium may contain ethylene-based fluoroolefin as a main refrigerant component, and additionally contain one or more chemical compounds other than ethylene-based fluoroolefin as one or more auxiliary refrigerant components. Examples of the auxiliary refrigerant components may include hydrofluorocarbons (HFC), hydrofluoroolefins (HFO), saturated hydrocarbons, and carbon dioxide. Examples of hydrofluorocarbons (HFC) may include difluoromethane, difluoroethane, trifluoroethane, tetrafluoroethane, pentafluoroethane, pentafluoropropane, hexafluoropropane, heptafluoropropane, pentafluorobutane, and heptafluorocyclopentane. Examples of hydrofluoroolefins (HFO) may include monofluoropropene, trifluoropropene, tetrafluoropropene, pentafluoropropene, and hexafluorobutene. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane.

The working medium may further contain a disproportionation inhibitor for suppressing a disproportionation reaction of the ethylene-based fluoroolefin. Examples of the disproportionation inhibitor may include a saturated hydrocarbon or a haloalkane. Examples of saturated hydrocarbons may include ethane, n-propane, cyclopropane, n-butane, cyclobutane, isobutane (2-methylpropane), methylcyclopropane, n-pentane, isopentane (2-methylbutane), neopentane (2,2-dimethylpropane), and methylcyclobutane. In the above examples, n-propane is preferred. Examples of haloalkanes may include haloalkanes having one or two carbon atoms. Examples of haloalkanes having one carbon atom (i.e., halomethanes) may include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), tetraiodomethane (CI₄), carbon tetrabromide (CBr₄), bromotrichloromethane (CBrCl₃), dibromodichloromethane (CBr₂Cl₂), tribromofluoromethane (CBr₃F), fluorodiiodomethane (CHFI₂), difluorodiiodomethane (CF₂I₂), and dibromodifluoromethane (CBr₂F₂), trifluoroiodomethane (CF₃I), and difluoroiodomethane (CHF₂I). Examples of haloalkanes with two carbon atoms (i.e. haloethanes) may include 1,1,1-trifluoro-2-iodoethane (CF₃CH₂I), monoiodoethane (CH₃CH₂I), monobromoethane (CH₃CH₂Br), and 1,1,1-triiodoethane (CH₃CI₃). The working medium may contain one or more types of haloalkanes having 1 or 2 carbon atoms. In other words, the haloalkanes having 1 or 2 carbon atoms may be used alone or in combination of two or more types.

The refrigeration cycle circuit 2 of Fig. 1 includes a compressor 4, a first heat exchanger 5, an expansion valve 6, a second heat exchanger 7, and a four-way valve 8.

The refrigeration cycle device 1 of Fig. 1 includes an outdoor unit 1a and an indoor unit 1b. The outdoor unit 1a includes the control device 3, the compressor 4, the first heat exchanger 5, the expansion valve 6, and the four-way valve 8. The first heat exchanger 5 performs heat exchange between outdoor air and the working medium 20. The outdoor unit 1a further includes a first air blower 5a for facilitating heat exchange at the first heat exchanger 5. The indoor unit 1b includes the second heat exchanger 7. The second heat exchanger 7 performs heat exchange between indoor air and the working medium 20. The indoor unit 1b further includes a second air blower 7a for facilitating heat exchange at the second heat exchanger 7.

In the refrigeration cycle circuit 2 of Fig. 1, the compressor 4 compresses the working medium to increase a pressure of the working medium. The compressor 4 would be described in detail later. The first heat exchanger 5 and the second heat exchanger 7 enable heat exchange between the working medium circulating in the refrigeration cycle circuit 2 and external air (e.g., the outdoor air or the indoor air). The expansion valve 6 regulates the pressure (evaporation pressure) of the working medium and regulates a flow volume of the working medium. The four-way valve 8 switches a direction of the working medium circulating in the refrigeration cycle circuit 2 between a first direction corresponding to the cooling operation and a second direction corresponding to the heating operation.

In the present embodiment, as shown by a solid arrow A1 in Fig. 1, the first direction is a direction in which the working medium circulates in the refrigeration cycle circuit 2 in the order of the compressor 4, the first heat exchanger 5, the expansion valve 6, and the second heat exchanger 7.

In the cooling operation, the compressor 4 compresses and discharges the gaseous working medium, and thus the gaseous working medium is sent to the first heat exchanger 5 through the four-way valve 8. The first heat exchanger 5 conducts heat exchange between the outdoor air and the gaseous working medium and then the gaseous working medium is condensed to be liquefied. The liquid working medium is decompressed by the expansion valve 6 and is sent to the second heat exchanger 7. The second heat exchanger 7 conducts heat exchange between the liquid working medium and the indoor air, and then the gaseous working medium evaporates to become the gaseous working medium. The gaseous working medium returns to the compressor 4 through the four-way valve 8. In the cooling operation, the first heat exchanger 5 functions as a condenser, and the second heat exchanger 7 functions as an evaporator. Thus, the indoor unit 1b sends air cooled via heat exchange at the second heat exchanger 7 to an interior during cooling.

In the present embodiment, as shown by a broken arrow A2 in Fig. 1, the second direction is a direction in which the working medium circulates in the refrigeration cycle circuit 2 in the order of the compressor 4, the second heat exchanger 7, the expansion valve 6, and the first heat exchanger 5.

In the heating operation, the compressor 4 compresses and discharges the gaseous working medium, and thus the gaseous working medium is sent to the second heat exchanger 7 through the four-way valve 8. The second heat exchanger 7 conducts heat exchange between the indoor air and the gaseous working medium and then the gaseous working medium is condensed to be liquefied. The liquid working medium is decompressed by the expansion valve 6 and is sent to the first heat exchanger 5. The first heat exchanger 5 conducts heat exchange between the liquid working medium and the outdoor air, and then the gaseous working medium evaporates to become the gaseous working medium. The gaseous working medium returns to the compressor 4 through the four-way valve 8. In the heating operation, the second heat exchanger 7 functions as a condenser, and the first heat exchanger 5 functions as an evaporator. Thus, the indoor unit 1b sends air warmed via heat exchange at the second heat exchanger 7 to an interior during the heating.

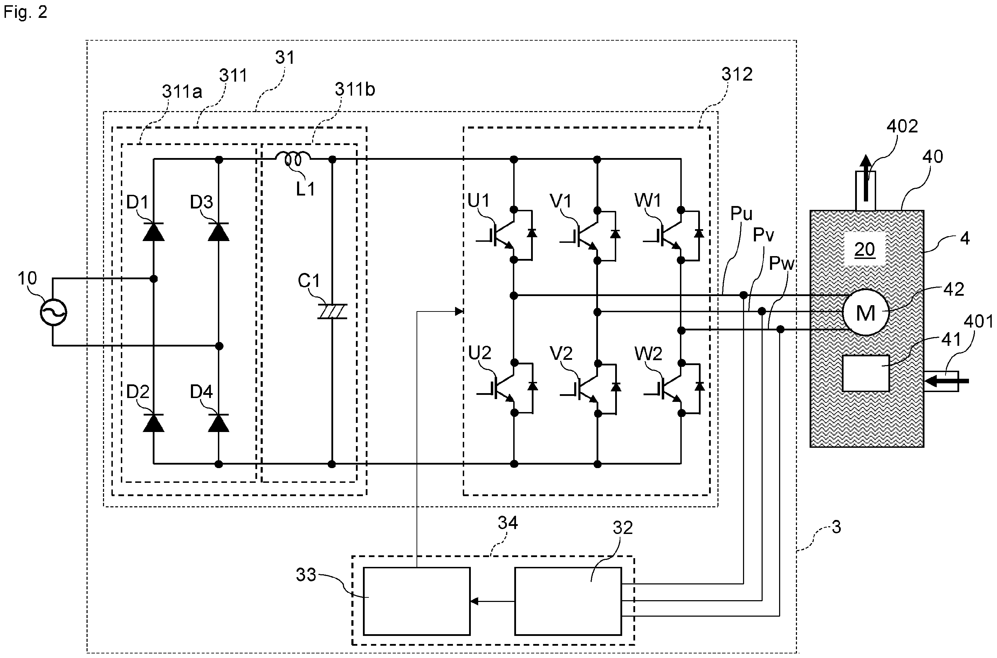

The control device 3 of Fig. 1 controls the refrigeration cycle circuit 2. In detail, the control device 3 controls the compressor 4, the first air blower 5a, the expansion valve 6, the second air blower 7a and the four-way valve 8, of the refrigeration cycle circuit 2. Fig. 2 is a schematic diagram of configuration examples of the compressor 4 and the control device 3.

The compressor 4 is, for example, a hermetically sealed compressor. The compressor 4 may be of a rotary type, a scroll type, or other well-known type. The compressor 4 of Fig. 2 includes a sealed container 40, a compression mechanism 41, and an electric motor 42.

The sealed container 40 of Fig. 2 constitutes a fluidic pathway for the working medium 20. The sealed container 40 includes a suction pipe 401 and a discharge pipe 402. The working medium 20 is suctioned into the sealed container 40 via the suction pipe 401 and then is compressed by the compression mechanism 41 and thereafter is discharged to an exterior of the sealed container 40 via the discharge pipe 402. The inside of the sealed container 40 is filled with the working medium 20 with a high temperature and a high pressure together with a lubricating oil. The sealed container 40 has a bottom part which constitutes an oil reservoir for storing a mixed liquid of the working medium 20 and the lubricating oil.

The compression mechanism 41 is positioned inside the sealed container 40 to compress the working medium 20. The compression mechanism 41 may have a conventional configuration. For example, the compression mechanism 41 may include a cylinder forming a compression chamber, a rolling piston disposed in the compression chamber inside the cylinder, and a crank shaft coupled to the rolling piston.

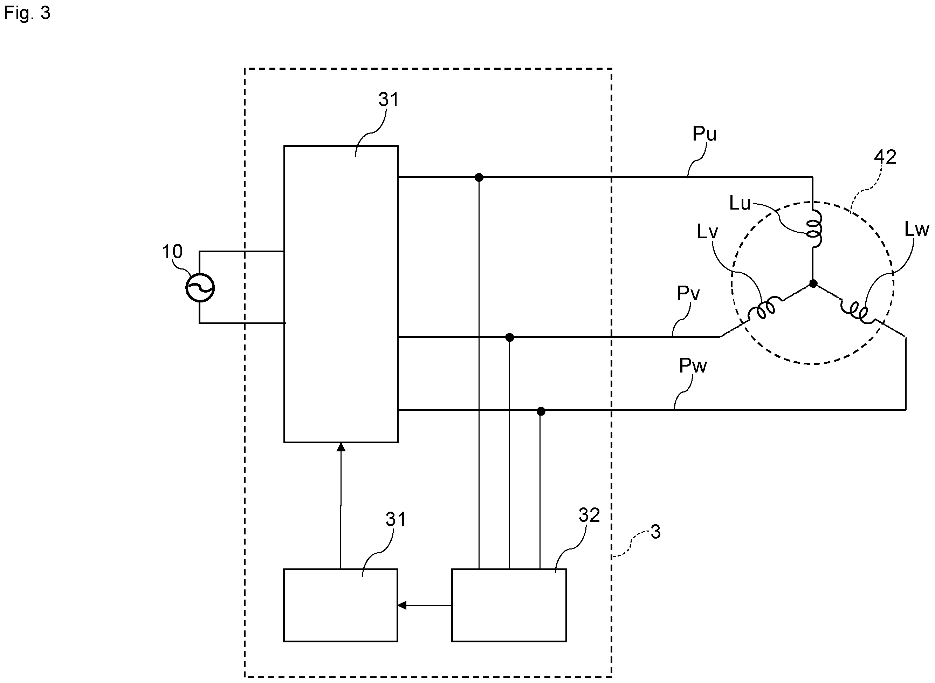

The electric motor 42 is positioned inside the sealed container 40 to operate the compression mechanism 41. The electric motor 42 is a three-phase brushless motor. Fig. 3 is a schematic diagram of configuration examples of the electric motor 42 and the control device 3. As shown in Fig. 3, the electric motor 42 includes a plurality of windings (stator windings) Lu, Lv, Lw. The plurality of windings include a U-phase winding Lu, a V-phase winding Lv, and a W-phase winding Lw. The electric motor 42 includes a rotator fixed to the crank shaft of the compression mechanism 41 and a stator provided in a vicinity of the rotator, for example. The stator is configured by concentrated or distributed winding of the windings (magnet wires) Lu, Lv, Lw around a stator core (electrical or magnetic steel sheet or the like) with an insulation paper in-between. The windings Lu, Lv, Lw are covered with insulating material. Examples of the insulating material may include polyethylene terephthalate (PET), polyethylene naphthalate (PEN), aramid polymer, and polyphenylene sulfide (PPS).

The compressor 4 may include an accumulator for preventing liquid compression in the compression chamber of the compression mechanism 41. The accumulator separates the working medium 20 into the gaseous working medium 20 and the liquid working medium 20 and directs only the gaseous working medium 20 to the sealed container 40 via the suction pipe 401.

The control device 3 of Fig. 2 and Fig. 3 includes a drive circuit 31, a detection circuit 32, and a control circuit 33.

The drive circuit 31 is configured to drive the electric motor 42. The drive circuit 31 of Fig. 2 is configured to supply drive power to the electric motor 42 based on power from a power supply 10. In the present embodiment, the power supply 10 is an alternating current power supply. The drive circuit 31 is configured to supply drive power to the electric motor 42 based on alternating current power from the power supply 10. Especially, the drive circuit 31 supplies three-phase alternating current power to the electric motor 42, as the drive power. The drive circuit 31 includes a converter circuit 311 and an inverter circuit 312.

The converter circuit 311 is configured to convert alternating current power from the power supply 10 into direct current power. The converter circuit 311 includes a rectification circuit 311a and a smoothing circuit 311b. The rectification circuit 311a is a diode bridge constituted by a plurality of diodes D1 to D4. The power supply 10 is connected between input terminals (a connecting point between the diodes D1, D2 and a connecting point between the diodes D3, D4) of the rectification circuit 311a and the smoothing circuit 311b is connected between output terminals (a connecting point between the diodes D1, D3 and a connecting point between the diodes D2, D4) of the rectification circuit 311a. The smoothing circuit 311b includes a series circuit of an inductor L1 and a capacitor C1, and is configured to smooth a voltage between the output terminals of the rectification circuit 311a to output it as a voltage across the capacitor C1. Configurations of the rectification circuit 311a and the smoothing circuit 311b of Fig. 2 are known and detailed description thereof is omitted.

The inverter circuit 312 is configured to supply three-phase alternating current power to the electric motor 42 based on the direct current power from the converter circuit 311. In particular, the inverter circuit 312 of Fig. 2 supplies three-phase alternating current power to the electric motor 42. The inverter circuit 312 includes a plurality of semiconductor switching elements U1, U2, V1, V2, W1, W2. The semiconductor switching elements U1, U2, V1, V2, W1, W2 are transistors, for example.

The semiconductor switching elements U1, U2 of Fig. 2 constitute a series circuit. The series circuit of the semiconductor switching elements U1, U2 is connected in parallel with the capacitor C1 of the converter circuit 311. A connecting point between the semiconductor switching elements U1, U2 is connected to the electric motor 42 via a U-phase power supply line Pu. As shown in Fig. 3, the power supply line Pu is connected to one end (U-phase input terminal) of the U-phase winding Lu of the electric motor 42.

The semiconductor switching elements V1, V2 of Fig. 2 constitute a series circuit. The series circuit of the semiconductor switching elements V1, V2 is connected in parallel with the capacitor C1 of the converter circuit 311. A connecting point between the semiconductor switching elements V1, V2 is connected to the electric motor 42 via a V-phase power supply line Pv. As shown in Fig. 3, the power supply line Pv is connected to one end (V-phase input terminal) of the V-phase winding Lv of the electric motor 42.

The semiconductor switching elements W1, W2 of Fig. 2 constitute a series circuit. The series circuit of the semiconductor switching elements W1, W2 is connected in parallel with the capacitor C1 of the converter circuit 311. A connecting point between the semiconductor switching elements W1, W2 is connected to the electric motor 42 via a W-phase power supply line Pw. As shown in Fig. 3, the power supply line Pw is connected to one end (W-phase input terminal) of the W-phase winding Lw of the electric motor 42.

In the inverter circuit 312, the series circuit of the semiconductor switching elements U1, U2 constitutes a U-phase leg. The series circuit of the semiconductor switching elements V1, V2 constitutes a V-phase leg. The series circuit of the semiconductor switching elements W1, W2 constitutes a W-phase leg. In this case, the semiconductor switching elements U1, U2, V1, V2, W1, W2 may be referred to as arms.

The configuration of the inverter circuit 312 of Fig. 2 is known and detailed description thereof is omitted.

The detection circuit 32 is configured to detect insulation deterioration of a winding (the U-phase winding Lu, the V-phase winding Lv, and the W-phase winding Lw,) of the electric motor 42.

In the present embodiment, the detection circuit 32 is configured to detect insulation deterioration of the winding (the U-phase winding Lu, the V-phase winding Lv, and the W-phase winding Lw,) of the electric motor 42 based on an evaluated value of an impulse response of the winding Lu, Lv, Lw. In detail, the detection circuit 32 is configured to measure the impulse response of the winding Lu, Lv, Lw of the electric motor 42. As one example, the impulse response is given by a time change in a current or a voltage of the winding Lu, Lv, Lw resulting from application of an impulse voltage to the winding Lu, Lv, Lw of the electric motor 42.

The detection circuit 32 of Fig. 3 is configured to measure the impulse responses of the windings Lu, Lv, Lw of the electric motor 42 by use of the power supply lines Pu, Pv, Pw from the drive circuit 31 to the windings Lu, Lv, Lw of the electric motor 42. The detection circuit 32 of Fig. 3 can apply an impulse voltage between the windings Lu, Lv of the electric motor 42 via the power supply lines Pu, Pv. The detection circuit 32 of Fig. 3 can apply an impulse voltage between the windings Lv, Lw of the electric motor 42 via the power supply lines Pv, Pw. The detection circuit 32 of Fig. 3 can apply an impulse voltage between the windings Lw, Lu of the electric motor 42 via the power supply lines Pw, Pu.

The detection circuit 32 detects insulation deterioration of the windings Lu, Lv, Lw of the electric motor 42 based on comparison using evaluated values of impulse responses of the windings Lu, Lv, Lw of the electric motor 42 obtained through measurement. Examples of the evaluated value of the impulse response may include an area (integrated value) of the impulse response, or, a mathematical value representing a waveform of the impulse response. The detection circuit 32 may determine occurrence of insulation deterioration of the winding Lu, Lv, Lw of the electric motor 42 when the evaluated value of the impulse response of the winding Lu, Lv, Lw of the electric motor 42 is equal to or lower than a threshold value. The threshold value may be set to allow determination of insulation deterioration of the winding Lu, Lv, Lw based on an evaluated value when the winding Lu, Lv, Lw is in a normal condition, and an evaluated value when insulation deterioration occurs. A measurement of the impulse response the winding Lu, Lv, Lw of the electric motor 42 may be an actually measured value resulting from direct measurement or an estimated value resulting from indirect measurement.

The control circuit 33 may be realized by a computer system including, at least, one or more processors (microprocessors) and one or more memories, for example. The control circuit 33 is configured to control the drive circuit 31. In detail, the control circuit 33 is configured to control switching of the plurality of semiconductor switching elements U1, U2, V1, V2, W1, W2 of the inverter circuit 312 of the drive circuit 31 to allow the inverter circuit 312 to supply three-phase alternating current power to the electric motor 42 based on direct current power from the smoothing circuit 311b. In the present embodiment, additionally, the control circuit 33 is configured to control an opening degree of the expansion valve 6, a rotational frequency of a fan of the first air blower 5a, a rotational frequency of a fan of the second air blower 7a, and switching of the four-way valve 8.

The control circuit 33 has functionality to perform a cooling operation and a heating operation. In the cooling operation, the control circuit 33 controls the refrigeration cycle circuit 2 so that the first heat exchanger 5 functions as the condenser and the second heat exchanger 7 functions as the evaporator. In the heating operation, the control circuit 33 controls the refrigeration cycle circuit 2 so that the first heat exchanger 5 functions as the evaporator and the second heat exchanger 7 functions as the condenser.

The control circuit 33 has a plurality of control modes for each of the cooling operation and the heating operation. In the present embodiment, the control circuit 33 has a first control mode and a second control mode. The first control mode is a normal operation mode to control the refrigeration cycle circuit 2 so that a current temperature of a space subject to temperature management by the refrigeration cycle device 1 is equal to a desired temperature. The second control mode is a safety operation mode or a limited operation mode to control the refrigeration cycle circuit 2 to prevent progress of a disproportionation reaction of the working medium in the refrigeration cycle circuit 2.

Factors of a disproportionation reaction of the working medium are considered to include heat and radicals. For example, it is considered that a disproportionation reaction of the working medium may progress when radicals are generated under a high temperature and high pressure environment. Radicals may be generated by a discharge phenomenon at the compressor 4, for example. The discharge phenomenon at the compressor 4 may be triggered by an insulation deterioration of the winding Lu, Lv, Lw of the electric motor 42. The insulation deterioration of the winding Lu, Lv, Lw of the electric motor 42 may finally cause electrical breakdown of the electric motor 42. In the compressor 4, heat is produced at the electric motor 42 during driving the electric motor 42 and therefore heat dissipation of the electric motor 42 is required. It is extremely efficient to use the working medium for heat dissipation of the electric motor 42. From this point of view, the electric motor 42 is placed inside the sealed container 40 to be allowed to be in contact with the working medium. However, when electrical breakdown of the electric motor 42 occurs and a discharge phenomenon is triggered, such a discharge phenomenon directly affect the working medium and as a result radicals may be produced under a high temperature and high pressure environment. Thus, occurrence of an insulation deterioration of the winding Lu, Lv, Lw of the electric motor 42 is more likely to assist progress of a disproportionation reaction of the working medium.

In the present embodiment, the control circuit 33 performs the first control mode when the detection circuit 32 has not detected insulation deteriorations of the windings Lu, Lv, Lw of the electric motor 42. The control circuit 33 performs the second control mode when the detection circuit 32 has detected an insulation deterioration of the winding Lu, Lv, Lw of the electric motor 42.

Hereinafter, detailed descriptions are made to the first control mode and the second control mode.

As described above, the first control mode is a normal operation mode to control the refrigeration cycle circuit 2 so that a current temperature of a space subject to temperature management by the refrigeration cycle device 1 is equal to a desired temperature. In the present embodiment, the first control mode controls the refrigeration cycle circuit 2 under a first condition. The first condition includes controlling the drive circuit 31 so that a current temperature of a space subject to temperature management by the refrigeration cycle device 1 is equal to a desired temperature. Optionally, the first condition may include controlling the expansion valve 6, the first air blower 5a, the second air blower 7a and the four-way valve 8 so that a current temperature of a space subject to temperature management by the refrigeration cycle device 1 is equal to a desired temperature. In the first control mode, the control circuit 33 controls, by the drive circuit 31, a desired value of a frequency of three-phase alternating current power output to the electric motor 42 of the compressor 4, a desired value of an opening degree of the expansion valve 6, a desired value of a rotational frequency of a fan of the first air blower 5a, a desired value of a rotational frequency of a fan of the second air blower 7a, and a switched state of the four-way valve 8. The first control mode may set the desired value of the frequency of the three-phase alternating current power, the desired value of the opening degree of the expansion valve 6, the desired value of the rotational frequency of the fan of the first air blower 5a, and the desired value of the rotational frequency of the fan of the second air blower 7a, based on the current temperature of the space subject to temperature management by the refrigeration cycle device 1 and the desired temperature. The switched state of the four-way valve 8 may be determined depending on the cooling operation, heating operation, or dehumidification operation, for example.

As described above, the second control mode is a safety operation mode or a limited operation mode to control the refrigeration cycle circuit 2 to prevent progress of a disproportionation reaction of the working medium in the refrigeration cycle circuit 2. In the present embodiment, the second control mode controls the refrigeration cycle circuit 2 under a second condition. The second condition is a condition which is lower in at least one of the maximum pressure or the highest temperature of the working medium 20 at the compressor 4, than the first condition. In other words, the second condition is set to more relieve a high temperature and high pressure environment to which the working medium 20 is subject, than that of the first condition. The second condition includes controlling the drive circuit 31 so that at least one of the maximum pressure or the highest temperature of the working medium at the compressor 4 is lower than that of the first condition. Optionally, the second condition may include controlling the expansion valve 6, the first air blower 5a, the second air blower 7a and the four-way valve 8 so that at least one of the maximum pressure or the highest temperature of the working medium at the compressor 4 is lower than that of the first condition. It is considered that a disproportionation reaction of the working medium may progress when radicals are generated under a high temperature and high pressure environment. Therefore, in the second control mode, the refrigeration cycle circuit 2 is controlled not to cause a condition with a high temperature and a high pressure.

In the refrigeration cycle circuit 2, a pressure and a temperature of the working medium at the compressor 4 tend to increase with an increase in an operating load. For example, in the cooling operation, the working load increases with an increase in a temperature of the outdoor air. For example, in the heating operation, the working load increases with a decrease in a temperature of the outdoor air. An increase in the working load may cause an increase in the maximum pressure or the highest temperature of the working medium 20 at the compressor 4. To avoid a situation where the pressure of the working medium 20 at the compressor 4 reaches a pressure which is likely to cause progress of a disproportionation reaction of the working medium 20 when a discharge phenomenon occurs at the winding Lu, Lv, Lw of the electric motor 42 inside the sealed container 40, or another situation where the temperature of the working medium 20 at the compressor 4 reaches a temperature which is likely to cause progress of a disproportionation reaction of the working medium 20 when a discharge phenomenon occurs at the winding Lu, Lv, Lw of the electric motor 42 inside the sealed container 40, the second control mode stops the operation of the electric motor 42 by the drive circuit 31. In the present embodiment, the second control mode stops the operation of the electric motor 42 by the drive circuit 31 when the temperature of the outdoor air exceeds an operation upper limit temperature in the cooling operation. In the present embodiment, the second control mode stops the operation of the electric motor 42 by the drive circuit 31 when the temperature of the outdoor air falls below an operation lower limit temperature in the heating operation. The operation upper limit temperature may be appropriately set based on whether the pressure of the working medium 20 at the compressor 4 reaches a pressure which is likely to cause progress of a disproportionation reaction of the working medium 20 when a discharge phenomenon occurs at the winding Lu, Lv, Lw of the electric motor 42 inside the sealed container 40, and whether the temperature of the working medium 20 at the compressor 4 reaches a temperature which is likely to cause progress of a disproportionation reaction of the working medium 20 when a discharge phenomenon occurs at the winding Lu, Lv, Lw of the electric motor 42 inside the sealed container 40, in the cooling operation. The operation lower limit temperature may be appropriately set based on whether the pressure of the working medium 20 at the compressor 4 reaches a pressure which is likely to cause progress of a disproportionation reaction of the working medium 20 when a discharge phenomenon occurs at the winding Lu, Lv, Lw of the electric motor 42 inside the sealed container 40, and whether the temperature of the working medium 20 at the compressor 4 reaches a temperature which is likely to cause progress of a disproportionation reaction of the working medium 20 when a discharge phenomenon occurs at the winding Lu, Lv, Lw of the electric motor 42 inside the sealed container 40, in the heating operation. As described above, in the second condition, the refrigeration cycle circuit 2 is prevented from operating at the working load likely to cause progress of a disproportionation reaction of the working medium 20 when a discharge phenomenon occurs at the winding Lu, Lv, Lw of the electric motor 42 inside the sealed container 40. This is equivalent to setting upper limits for the pressure and the temperature of the working medium 20 at the compressor 4. Therefore, in the second condition, at least one of the maximum pressure or the highest temperature of the working medium 20 at the compressor 4 is lower than that in the first condition. Accordingly, the safety of the operation of the refrigeration cycle device 1 can be improved. Additionally, the second control mode stops operations of the first air blower 5a and the second air blower 7a. In the second control mode, the switched state of the four-way valve 8 is not specifically changed but may be remained in the previous state.

### [1.2 OPERATIONS]

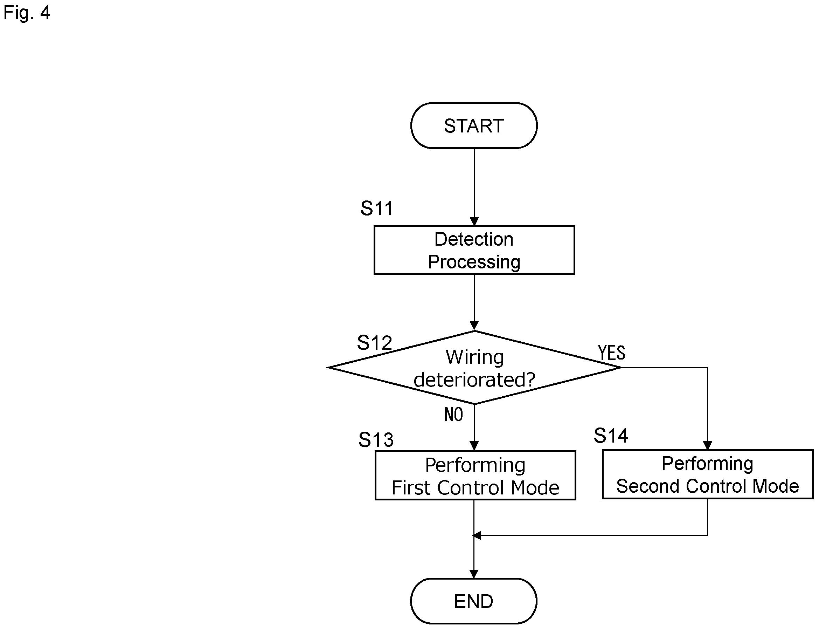

Hereinafter, one example of the operation of the control circuit 33 of the control device 3 of the refrigeration cycle device 1 will be described quickly with reference to Fig. 4. Fig. 4 is a flowchart of one example of the operation of the control circuit 33 of the control device 3.

Before the drive circuit 31 drives the electric motor 42, the control circuit 33 instructs the detection circuit 32 to perform detection processing for insulation deterioration of the winding Lu, Lv, Lw of the electric motor 42 (S11).

When the detection circuit 32 has not detected insulation deterioration of the winding Lu, Lv, Lw of the electric motor 42 (S12; NO), the control circuit 33 performs the first control mode to control the refrigeration cycle circuit 2 under the first condition (S13).

When the detection circuit 32 has detected insulation deterioration of the winding Lu, Lv, Lw of the electric motor 42 (S12; YES), the control circuit 33 performs the second control mode to control the refrigeration cycle circuit 2 under the second condition (S14).

As described above, the control circuit 33 determines whether the detection circuit 32 has detected insulation deterioration of the winding Lu, Lv, Lw of the electric motor 42 before the drive circuit 31 operates the electric motor 42. The control circuit 33 performs the first control mode when the detection circuit 32 has not detected insulation deterioration of the winding Lu, Lv, Lw of the electric motor 42. The control circuit 33 performs the second control mode when the detection circuit 32 has detected insulation deterioration of the winding Lu, Lv, Lw of the electric motor 42. Accordingly, in a situation where insulation deterioration of the winding Lu, Lv, Lw of the electric motor 42 has occurred and a disproportionation reaction of the working medium is likely to progress, the normal operation mode is switched to the safety operation mode, and thus a disproportionation reaction of the working medium can be suppressed.

### [1.3 ADVANTAGESOUS EFFECTS]

The aforementioned refrigeration cycle device 1 includes: the refrigeration cycle circuit 2 including the compressor 4, the condenser (the first heat exchanger 5, the second heat exchanger 7), the expansion valve 6 and the evaporator (the first heat exchanger 5, the second heat exchanger 7) and allowing circulation of the working medium 20; and the control device 3 configured to control the compressor 4 of the refrigeration cycle circuit 2. The working medium 20 contains ethylene-based fluoroolefin as a refrigerant component. The compressor 4 includes the sealed container 40 constituting a fluidic pathway for the working medium 20, the compression mechanism 41 positioned inside the sealed container 40 to compress the working medium 20, and the electric motor 42 positioned inside the sealed container 40 to operate the compression mechanism 41. The control device 3 includes the drive circuit 31 configured to drive the electric motor 42, the detection circuit 32 configured to detect insulation deterioration of the winding Lu, Lv, Lw of the electric motor 42, and the control circuit 33 having the first control mode for controlling the drive circuit 31 under the first condition and the second control mode for controlling the drive circuit 31 under the second condition lower in at least one of the maximum pressure or the highest temperature of the working medium 20 at the compressor 4 than the first condition, and configured to select the second control mode when the detection circuit 32 has detected insulation deterioration of the winding Lu, Lv, Lw of the electric motor 42. This configuration enables suppression of a disproportionation reaction of the working medium 20.

In the refrigeration cycle device 1, the control circuit 33 is configured to determine whether the detection circuit 32 has detected insulation deterioration of the winding Lu, Lv, Lw of the electric motor 42 before the drive circuit 31 operates the electric motor 42. The control circuit 33 is configured to perform the first control mode when the detection circuit 32 has not detected insulation deterioration of the winding Lu, Lv, Lw of the electric motor 42, and perform the second control mode when the detection circuit 32 has detected insulation deterioration of the winding Lu, Lv, Lw of the electric motor 42. This configuration can improve safety of the operation of the refrigeration cycle device 1.

In the refrigeration cycle device 1, the refrigeration cycle circuit 2 includes the first heat exchanger 5 configured to perform heat exchange between the outdoor air and the working medium 20 and the second heat exchanger 7 configured to perform heat exchange between the indoor air and the working medium 20. The control circuit 33 has functionality to perform the cooling operation to control the refrigeration cycle circuit 2 so that the first heat exchanger 5 functions as the condenser and the second heat exchanger 7 functions as the evaporator, and to perform the heating operation to control the refrigeration cycle circuit 2 so that the first heat exchanger 5 functions as the evaporator and the second heat exchanger 7 functions as the condenser. The second control mode stops the operation of the electric motor 42 by the drive circuit 31 when the temperature of the outdoor air exceeds the operation upper limit temperature in the cooling operation, or stops the operation of the electric motor 42 by the drive circuit 31 when the temperature of the outdoor air falls below the operation lower limit temperature in the heating operation. This configuration can improve safety of the operation of the refrigeration cycle device 1.

In the refrigeration cycle device 1, the detection circuit 32 is configured to: measure at least one of an impulse response, a resistance, or an inductance of the winding Lu, Lv, Lw of the electric motor 42; and detect insulation deterioration of the winding Lu, Lv, Lw of the electric motor 42 based on at least one of comparison of at least one of an evaluated value of the impulse response, the resistance, or the inductance of the winding Lu, Lv, Lw of the electric motor 42 with a threshold value or comparison between at least one of a plurality of evaluated values, resistances, or inductances of the winding Lu, Lv, Lw of the electric motor 42. This configuration can improve accuracy of detection of insulation deterioration of the winding Lu, Lv, Lw of the electric motor 42.

In the refrigeration cycle device 1, the detection circuit 32 is configured to measure at least one of the impulse response, the resistance, or the inductance of the winding Lu, Lv, Lw of the electric motor 42 by use of the power supply line Pu, Pv, Pw from the drive circuit 31 to the winding Lu, Lv, Lw of the electric motor 42. This configuration enables simplification of the configuration of the control device.

In the refrigeration cycle device 1, the detection circuit 32 is placed on the same substrate 34 of the control circuit 33. This configuration enables simplification of the configuration of the control device.

In the refrigeration cycle device 1, the ethylene-based fluoroolefin contains ethylene-based fluoroolefin likely to undergo a disproportionation reaction. This configuration enables suppression of a disproportionation reaction of the working medium 20.

In the refrigeration cycle device 1, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This configuration enables suppression of a disproportionation reaction of the working medium 20.

In the refrigeration cycle device 1, the working medium 20 contains difluoromethane as the refrigerant component. This configuration enables suppression of a disproportionation reaction of the working medium 20.

In the refrigeration cycle device 1, the working medium 20 further contains a saturated hydrocarbon. This configuration enables suppression of a disproportionation reaction of the working medium 20.

In the refrigeration cycle device 1, the working medium 20 contains a haloalkane with 1 or 2 carbon atoms as a disproportionation inhibitor for suppressing a disproportionation reaction of the ethylene-based fluoroolefin. This configuration enables suppression of a disproportionation reaction of the working medium 20.

In the refrigeration cycle device 1, the saturated hydrocarbon contains n-propane. This configuration enables suppression of a disproportionation reaction of the working medium 20.

### [2. VARIATIONS]

Embodiments of the present disclosure are not limited to the above embodiment. The above embodiment may be modified in various ways in accordance with designs or the like to an extent that they can achieve the problem of the present disclosure. Hereinafter, some variations or modifications of the above embodiment will be listed. One or more of the variations or modifications described below may apply in combination with one or more of the others.

### [2.1 VARIATION 1]

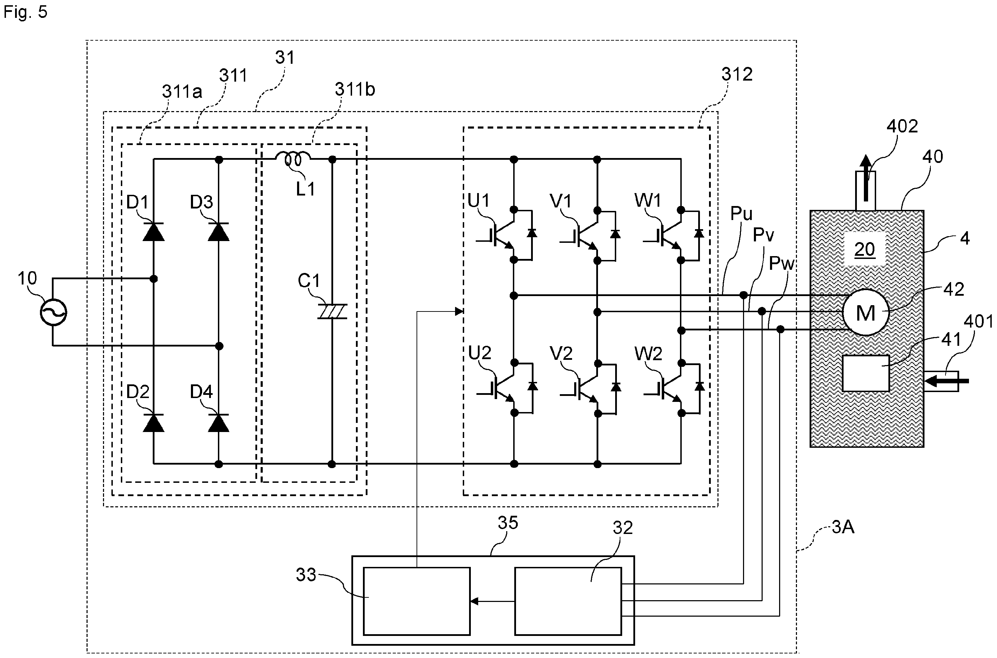

Fig. 5 is a schematic diagram of configuration examples of the compressor 4 and a control device 3A of a refrigeration cycle device in accordance with variation 1. The control device 3A of Fig. 5 includes the drive circuit 31, the detection circuit 32, and the control circuit 33. In the control device 3A of Fig. 5, the detection circuit 32 constitutes an integrated circuit 35 together with the control circuit 33. Accordingly, the detection circuit 32 and the control circuit 33 are not separate circuit parts, but are integrated as a single circuit part. Therefore, it is possible to reduce a space necessary for placing the detection circuit 32 and the control circuit 33 and thus the configuration of the control device 3A can be simplified. The integrated circuit 35 may be placed on the same substrate of the drive circuit 31.

### As described above, in the control device 3A of the refrigeration cycle device, the detection circuit 32 constitutes the integrated circuit 35 together with the control circuit 33. This configuration can simplify the configuration of the control device 3A.

### [2.2 VARIATION 2]

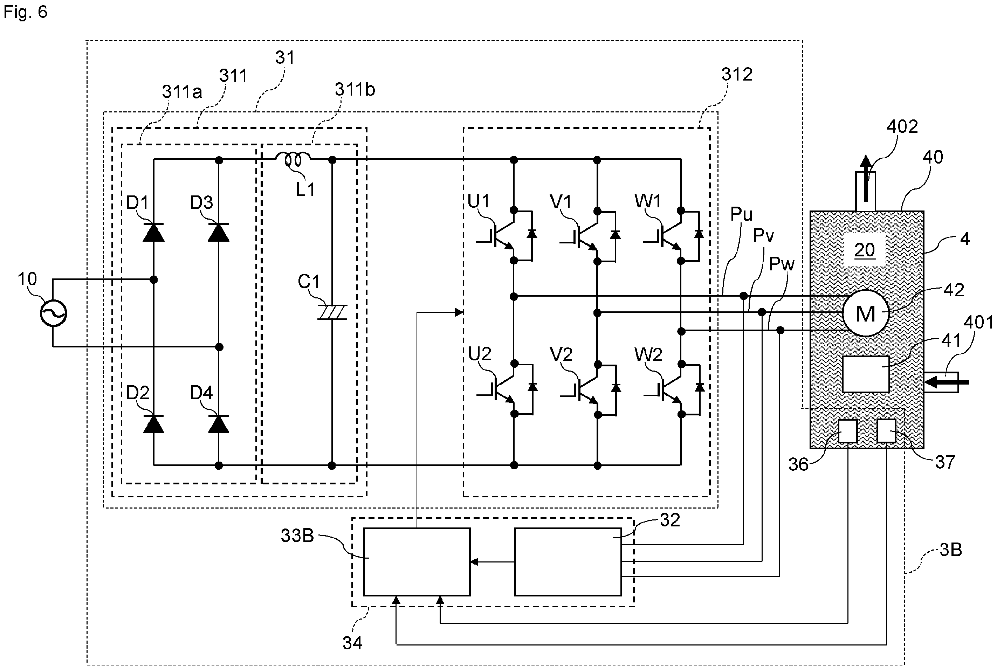

Fig. 6 is a schematic diagram of configuration examples of the compressor 4 and a control device 3B of a refrigeration cycle device in accordance with variation 2.

The control device 3B of Fig. 6 includes the drive circuit 31, the detection circuit 32, the control circuit 33, a pressure measurement circuit 36, and a temperature measurement circuit 37.

The pressure measurement circuit 36 is configured to measure a pressure of the working medium 20 at the compressor 4. The pressure measurement circuit 36 of Fig. 6 measures an internal pressure of the sealed container 40 of the compressor 4 as the pressure of the working medium 20 at the compressor 4. The pressure measurement circuit 36 outputs a pressure measurement signal representative of the measured internal pressure (the pressure of the working medium 20 at the compressor 4) to the control circuit 33. The pressure measurement circuit 36 is a pressure sensor positioned inside the sealed container 40, for example. The pressure measurement circuit 36 may not be limited to the pressure sensor positioned inside the sealed container 40. It is sufficient that the pressure measurement circuit 36 can measure the pressure of the working medium 20 at the compressor 4 directly or indirectly.

The temperature measurement circuit 37 is configured to measure a temperature of the working medium 20 at the compressor 4. The temperature measurement circuit 37 of Fig. 6 measures an internal temperature of the sealed container 40 of the compressor 4 as the temperature of the working medium 20 at the compressor 4. The temperature measurement circuit 37 outputs a temperature measurement signal representative of the measured internal temperature (the temperature of the working medium 20 at the compressor 4) to the control circuit 33. The temperature measurement circuit 37 is a temperature sensor positioned inside the sealed container 40, for example. The temperature measurement circuit 37 may not be limited to the temperature sensor positioned inside the sealed container 40. It is sufficient that the temperature measurement circuit 37 can measure the temperature of the working medium 20 at the compressor 4 directly or indirectly.

In the present variation, the control circuit 33 performs the first control mode when the detection circuit 32 has not detected insulation deterioration of the winding Lu, Lv, Lw of the electric motor 42. The control circuit 33 performs the second control mode when the detection circuit 32 has detected insulation deterioration of the winding Lu, Lv, Lw of the electric motor 42.

Similarly to the second control mode of the embodiment, the second control mode of the present variation is a safety operation mode or a limited operation mode to control the refrigeration cycle circuit 2 to prevent progress of a disproportionation reaction of the working medium 20 in the refrigeration cycle circuit 2. In the present variation, the second control mode controls the refrigeration cycle circuit 2 to make the pressure of the working medium 20 at the compressor 4 be equal to or lower than a predetermined pressure and to make the temperature of the working medium 20 at the compressor 4 be equal to or lower than a predetermined temperature. Specifically, in the second control mode, the control circuit 33 sets, by the drive circuit 31, the desired value of the frequency of three-phase alternating current power output to the electric motor 42 of the compressor 4, the desired value of the opening degree of the expansion valve 6, the desired value of the rotational frequency of the fan of the first air blower 5a, and the desired value of the rotational frequency of the fan of the second air blower 7a, so that the pressure of the working medium 20 at the compressor 4 measured by the pressure measurement circuit 36 is equal to or lower than the predetermined pressure and the temperature of the working medium 20 at the compressor 4 measured by the temperature measurement circuit 37 is equal to or lower than the predetermined temperature. The switched state of the four-way valve 8 may be determined depending on the cooling operation, heating operation, or dehumidification operation, for example.

The predetermined pressure and the predetermined temperature are set to lower a probability of progress of a disproportionation reaction of the working medium 20 than in a case where control of the refrigeration cycle circuit 2 continues with the first control mode being remained. In the present variation, the predetermined pressure and the predetermined temperature are set to prevent progress of a disproportionation reaction of the working medium 20 even if a discharge phenomenon has occurred at the winding Lu, Lv, Lw of the electric motor 42 inside the sealed container 40. The predetermined pressure and the predetermined temperature may be set appropriately depending on a composition or the like of the working medium 20. For example, the predetermined pressure and the predetermined temperature may be set based on a result of a test regarding whether a disproportionation reaction of the working medium 20 progresses in a situation where a discharge phenomenon has occurred at the winding Lu, Lv, Lw of the electric motor 42 inside the sealed container 40.

The predetermined pressure may be set based on a pressure of the working medium 20 within a normal operation range of the refrigeration cycle circuit 2. In one example, when the pressure of the working medium 20 within the normal operation range of the refrigeration cycle circuit 2 is 6 MPa, the predetermined pressure is set to 5 MPa.

The predetermined temperature is lower than a safety temperature of the working medium 20 and is lower than a heatproof temperature of an insulating component of the electric motor 42 of the compressor 4, for example. The safety temperature of the working medium 20 may be set based on a temperature likely to cause a disproportionation reaction of the working medium 20 under a pressure condition at the normal operation of the refrigeration cycle device 1. In one example, the safety temperature of the working medium 20 is set to 150 °C. The heatproof temperature of the electric motor 42 of the compressor 4 may be set based on a heatproof temperature of an insulating component of the electric motor 42 of the compressor 4, for example. For example, the heatproof temperature of the insulating component of the electric motor 42 may be a heatproof temperature of an insulating component with a heatproof temperature which is the lowest of heatproof temperatures of insulating components of the electric motor 42.
When the operation of the refrigeration cycle device 1 continues under a situation where the internal temperature exceeds the heatproof temperature, insulating paper may be destroyed and this may result in an increase in a probability of occurrence of a discharge phenomenon. In one example, an insulating component the heatproof temperature of which is the lowest in the electric motor 42 may be insulating paper between a stator core (electrical or magnetic steel sheet or the like) and a stator winding (magnet wire or the like). The insulating paper has a heatproof temperature of 120 °C when its thermal class is E defined in JIS C 4003, for example. When the safety temperature of the working medium 20 is 150 °C and the heatproof temperature of the electric motor 42 of the compressor 4 is 120 °C, the predetermined temperature is set to a temperature lower than 120 °C. In this case, a safety margin may be set to about 5 °C in consideration of a temperature detection time difference between a temperature of the working medium and a stator, or heat dissipation. Thus, the predetermined temperature may be set to 115 °C. The safety margin may depend on a distance between the temperature measurement circuit 37 and the stator or a motor efficiency, and therefore it may not be 5 °C but may be a value within a range of 0 to 20 °C. The thermal class of the insulating paper may not be limited to E, but may be B, F, or the like. When the thermal class is B, the heatproof temperature is 130°C. When the safety temperature of the working medium 20 is 150 °C, the predetermined temperature is set to a temperature lower than 130 °C, e.g., 125 °C. When the thermal class is F, the heatproof temperature is 155 °C. When the safety temperature of the working medium 20 is 150 °C, the predetermined temperature is set to a temperature lower than 150°C, e.g., 145 °C.

In the control device 3B of the aforementioned refrigeration cycle device, the second control mode controls the refrigeration cycle circuit 2 to make the pressure of the working medium 20 at the compressor 4 be equal to or lower than the predetermined pressure and to make the temperature of the working medium 20 at the compressor 4 be equal to or lower than the predetermined temperature. The predetermined pressure and the predetermined temperature are set to prevent progress of a disproportionation reaction of the working medium 20 even if a discharge phenomenon has occurred at the winding Lu, Lv, Lw of the electric motor 42 inside the sealed container 40. This configuration enables continuation of the operation of the refrigeration cycle device while suppressing a disproportionation reaction of the working medium 20.

### [2.3 OTHER VARIATIONS]

In one variation, the detection circuit 32 may detect insulation deterioration of the winding Lu, Lv, Lw of the electric motor 42 based on comparison between evaluated values of impulse responses of the plurality of windings Lu, Lv, Lw of the electric motor 42, in addition to or as an alternative to comparison of an evaluated value of an impulse response of the winding Lu, Lv, Lw of the electric motor 42 with a threshold value. Normally, the evaluated values of the impulse responses of the plurality of windings Lu, Lv, Lw of the electric motor 42 have the same value. Therefore, the detection circuit 32 may determine that insulation deterioration has occurred at any of the windings Lu, Lv, Lw of the electric motor 42 when a difference between the evaluated values of the impulse responses of any combination of the plurality of windings Lu, Lv, Lw of the electric motor 42 is equal to or larger than a predetermined value.

In one variation, the detection circuit 32 may detect insulation deterioration of a winding (the U-phase winding Lu, the V-phase winding Lv, the W-phase winding Lw) of the electric motor 42 based on not the impulse response but a resistance of the winding Lu, Lv, Lw of the electric motor 42. As one example, the detection circuit 32 measures a resistance of the winding Lu, Lv, Lw of the electric motor 42 and then detects insulation deterioration of the winding Lu, Lv, Lw of the electric motor 42 based on comparison of the resistance of the winding Lu, Lv, Lw of the electric motor 42 with a threshold value. Measuring the resistance of the winding Lu, Lv, Lw of the electric motor 42 as such may be realized by a conventional method and therefore description thereof may be omitted. The detection circuit 32 may determine that insulation deterioration of the winding Lu, Lv, Lw of the electric motor 42 has occurred when the resistance of the winding Lu, Lv, Lw of the electric motor 42 is equal to or lower than the threshold value. The threshold value may be set to determine insulation deterioration of the winding Lu, Lv, Lw based on the resistance of the winding Lu, Lv, Lw at the normal state and the resistance at the insulation deterioration. The resistance of the winding Lu, Lv, Lw may vary depending on the temperature of the winding Lu, Lv, Lw and therefore the threshold value may be a function of the temperature of the winding Lu, Lv, Lw. Measurement of the resistance of the winding Lu, Lv, Lw of the electric motor 42 may be an actually measured value resulting from direct measurement or an estimated value resulting from indirect measurement.

In one variation, the detection circuit 32 may detect insulation deterioration of the winding Lu, Lv, Lw of the electric motor 42 based on comparison between resistances of the plurality of windings Lu, Lv, Lw of the electric motor 42, in addition to or as an alternative to comparison of a resistance of the winding Lu, Lv, Lw of the electric motor 42 with a threshold value. Normally, the resistances of the plurality of windings Lu, Lv, Lw of the electric motor 42 have the same value. Therefore, the detection circuit 32 may determine that insulation deterioration has occurred at any of the windings Lu, Lv, Lw of the electric motor 42 when a difference between the resistances of any combination of the plurality of windings Lu, Lv, Lw of the electric motor 42 is equal to or larger than a predetermined value.

In one variation, the detection circuit 32 may measure the resistance of the winding Lu, Lv, Lw of the electric motor 42 by use of the power supply line Pu, Pv, Pw from the drive circuit 31 to the winding Lu, Lv, Lw of the electric motor 42. As shown in Fig. 3, the detection circuit 32 may measure a resistance of a series circuit of the windings Lu, Lv of the electric motor 42 via the power supply lines Pu, Pv. The detection circuit 32 may measure a resistance of a series circuit of the windings Lv, Lw of the electric motor 42 via the power supply lines Pv, Pw. The detection circuit 32 may measure a resistance of a series circuit of the windings Lw, Lu of the electric motor 42 via the power supply lines Pw, Pu. Through calculation, a resistance of each winding Lu, Lv, Lw can be obtained.

In one variation, the detection circuit 32 may detect insulation deterioration of a winding (the U-phase winding Lu, the V-phase winding Lv, the W-phase winding Lw) of the electric motor 42 based on not the impulse response or the resistance but an inductance of the winding Lu, Lv, Lw of the electric motor 42. As one example, the detection circuit 32 measures an inductance of the winding Lu, Lv, Lw of the electric motor 42 and then detects insulation deterioration of the winding Lu, Lv, Lw of the electric motor 42 based on comparison of the inductance of the winding Lu, Lv, Lw of the electric motor 42 with a threshold value. Measuring the inductance of the winding Lu, Lv, Lw of the electric motor 42 as such may be realized by a conventional method and therefore description thereof may be omitted. The detection circuit 32 may determine that insulation deterioration of the winding Lu, Lv, Lw of the electric motor 42 has occurred when the inductance of the winding Lu, Lv, Lw of the electric motor 42 is equal to or lower than the threshold value. The threshold value may be set to determine insulation deterioration of the winding Lu, Lv, Lw based on the inductance of the winding Lu, Lv, Lw at the normal state and the inductance at the insulation deterioration. Measurement of the inductance of the winding Lu, Lv, Lw of the electric motor 42 may be an actually measured value resulting from direct measurement or an estimated value resulting from indirect measurement.

In one variation, the detection circuit 32 may detect insulation deterioration of the winding Lu, Lv, Lw of the electric motor 42 based on comparison between inductances of the plurality of windings Lu, Lv, Lw of the electric motor 42, in addition to or as an alternative to comparison of an inductance of the winding Lu, Lv, Lw of the electric motor 42 with a threshold value. Normally, the inductances of the plurality of windings Lu, Lv, Lw of the electric motor 42 have the same value. Therefore, the detection circuit 32 may determine that insulation deterioration has occurred at any of the windings Lu, Lv, Lw of the electric motor 42 when a difference between the inductances of any combination of the plurality of windings Lu, Lv, Lw of the electric motor 42 is equal to or larger than a predetermined value.

In one variation, the detection circuit 32 may measure the inductance of the winding Lu, Lv, Lw of the electric motor 42 by use of the power supply line Pu, Pv, Pw from the drive circuit 31 to the winding Lu, Lv, Lw of the electric motor 42. As shown in Fig. 3, the detection circuit 32 may measure an inductance of a series circuit of the windings Lu, Lv of the electric motor 42 via the power supply lines Pu, Pv. The detection circuit 32 may measure an inductance of a series circuit of the windings Lv, Lw of the electric motor 42 via the power supply lines Pv, Pw. The detection circuit 32 may measure an inductance of a series circuit of the windings Lw, Lu of the electric motor 42 via the power supply lines Pw, Pu. Through calculation, an inductance of each winding Lu, Lv, Lw can be obtained.

In one variation, the detection circuit 32 may detect insulation deterioration of the winding Lu, Lv, Lw of the electric motor 42 by use of two or more of an impulse response, a resistance, or an inductance of the winding Lu, Lv, Lw of the electric motor 42. This allows detection of insulation deterioration of the winding Lu, Lv, Lw of the electric motor 42 from a plurality of points of view, and may result in improvement of detection accuracy of insulation deterioration of the winding Lu, Lv, Lw of the electric motor 42.

As described above, the detection circuit 32 may be configured to: measure at least one of an impulse response, a resistance, or an inductance of the winding Lu, Lv, Lw of the electric motor 42; and detect insulation deterioration of the winding Lu, Lv, Lw of the electric motor 42 based on at least one of comparison of at least one of an evaluated value of the impulse response, the resistance, or the inductance of the winding Lu, Lv, Lw of the electric motor 42 with a threshold value or comparison between at least one of a plurality of evaluated values, resistances, or inductances of the winding Lu, Lv, Lw of the electric motor 42. In this case, the detection circuit 32 may be configured to measure at least one of the impulse response, the resistance, or the inductance of the winding Lu, Lv, Lw of the electric motor 42 by use of a power supply line Pu, Pv, Pw from the drive circuit 31 to the winding Lu, Lv, Lw of the electric motor 42.

In one variation, the impulse voltage may be applied to the electric motor 42 by use of the drive circuit 31. By turning on the semiconductor switching elements U1, V2 for a short time from a state where the semiconductor switching elements U1, U2, V1, V2, W1, W2 are off, an impulse voltage can be applied between the windings Lu, Lv of the electric motor 42 via the power supply lines Pu, Pv. By turning on the semiconductor switching elements V1, W2 for a short time from a state where the semiconductor switching elements U1, U2, V1, V2, W1, W2 are off, an impulse voltage can be applied between the windings Lv, Lw of the electric motor 42 via the power supply lines Pv, Pw. By turning on the semiconductor switching elements W1, U2 for a short time from a state where the semiconductor switching elements U1, U2, V1, V2, W1, W2 are off, an impulse voltage can be applied between the windings Lw, Lu of the electric motor 42 via the power supply lines Pw, Pu.

In one variation, the second control mode may include at least one of a function of stopping or terminating the operation of the electric motor 42 by the drive circuit 31 when the temperature of the outdoor air exceeds the operation upper limit temperature in the cooling operation, or another function of stopping or terminating the operation of the electric motor 42 by the drive circuit 31 when the temperature of the outdoor air falls below the operation lower limit temperature in the heating operation. The second control mode may stop or terminate the operation of the electric motor 42 by the drive circuit 31 regardless of the temperature of the outdoor air. In summary, when the detection circuit 32 has detected insulation deterioration of the winding Lu, Lv, Lw of the electric motor 42, the control circuit 33 may stop the operation of the electric motor 42 by the drive circuit 31.

In one variation, the refrigeration cycle device is not limited to an air conditioner with a configuration where one indoor unit is connected to one outdoor unit (so called, a room air conditioner (RAC)). The refrigeration cycle device may be an air conditioner with a configuration where a plurality of indoor units are connected to one or more outdoor units (so-called, a package air conditioner (PAC) or a variable refrigerant flow (VRF)). Or, the refrigeration cycle device is not limited to an air conditioner, but may be a freezing or refrigerating device such as a refrigerator or a freezer.

### [3. ASPECTS]

As apparent from the above embodiment and variations, the present disclosure includes the following aspects. Hereinafter, reference signs in parenthesis are attached for the purpose of clearly showing correspondence with the embodiments only. Note that, in consideration of readability of texts, the reference signs in parentheses may be omitted from the second and subsequent times.

A first aspect is a refrigeration cycle device (1) and includes a refrigeration cycle circuit (2) including a compressor (4), a condenser (the first heat exchanger 5, the second heat exchanger 7), an expansion valve (6) and an evaporator (the first heat exchanger 5, the second heat exchanger 7), and allowing circulation of a working medium (20); and a control device (3; 3A; 3B) configured to control the refrigeration cycle circuit (2). The working medium (20) contains ethylene-based fluoroolefin as a refrigerant component. The compressor (4) includes a sealed container (40) constituting a fluidic pathway for the working medium (20), a compression mechanism (41) positioned inside the sealed container (40) to compress the working medium (20), and an electric motor (42) positioned inside the sealed container (40) to operate the compression mechanism (41). The control device (3; 3A; 3B) includes a drive circuit (31) configured to drive the electric motor (42), a detection circuit (32) configured to detect insulation deterioration of a winding (Lu, Lv, Lw) of the electric motor (42), and a control circuit (33) having a first control mode for controlling the refrigeration cycle circuit (2) under a first condition and a second control mode for controlling the refrigeration cycle circuit (2) under a second condition lower in at least one of a maximum pressure or a highest temperature of the working medium (20) at the compressor (4) than the first condition, and configured to select the second control mode when the detection circuit (32) has detected insulation deterioration of the winding (Lu, Lv, Lw) of the electric motor (42). This aspect enables suppression of a disproportionation reaction of the working medium (20).

A second aspect is a refrigeration cycle device (1) based on the first aspect. In this aspect, the control circuit (33) is configured to determine whether the detection circuit (32) has detected insulation deterioration of the winding (Lu, Lv, Lw) of the electric motor (42) before the drive circuit (31) operates the electric motor (42). The control circuit (33) is configured to perform the first control mode when the detection circuit (32) has not detected insulation deterioration of the winding (Lu, Lv, Lw) of the electric motor (42), and perform the second control mode when the detection circuit (32) has detected insulation deterioration of the winding (Lu, Lv, Lw) of the electric motor (42). This aspect can improve safety of the operation of the refrigeration cycle device (1).

A third aspect is a refrigeration cycle device (1) based on the first or second aspect. In this aspect, the second control mode controls the refrigeration cycle circuit (2) to make a pressure of the working medium (20) at the compressor (4) be equal to or lower than a predetermined pressure and to make a temperature of the working medium (20) at the compressor (4) be equal to or lower than a predetermined temperature. The predetermined pressure and the predetermined temperature are set to prevent progress of a disproportionation reaction of the working medium (20) even if a discharge phenomenon has occurred at the winding (Lu, Lv, Lw) of the electric motor (42) inside the sealed container (40). This aspect enables continuation of the operation of the refrigeration cycle device (1) while suppressing a disproportionation reaction of the working medium (20).

A fourth aspect is a refrigeration cycle device (1) based on the first or second aspect. In this aspect, the refrigeration cycle circuit (2) includes a first heat exchanger (5) configured to perform heat exchange between outdoor air and the working medium (20) and a second heat exchanger (7) configured to perform heat exchange between indoor air and the working medium (20). The control circuit (33) has functionality to perform a cooling operation to control the refrigeration cycle circuit (2) so that the first heat exchanger (5) functions as the condenser and the second heat exchanger (7) functions as the evaporator, and to perform a heating operation to control the refrigeration cycle circuit (2) so that the first heat exchanger (5) functions as the evaporator and the second heat exchanger (7) functions as the condenser. The second control mode stops an operation of the electric motor (42) by the drive circuit (31) when a temperature of the outdoor air exceeds an operation upper limit temperature in the cooling operation, or stops an operation of the electric motor (42) by the drive circuit (31) when a temperature of the outdoor air falls below an operation lower limit temperature in the heating operation. This aspect can improve safety of the operation of the refrigeration cycle device (1).

A fifth aspect is a refrigeration cycle device (1) based on any one of the first to fourth aspects. In this aspect, the detection circuit (32) is configured to: measure at least one of an impulse response, a resistance, or an inductance of the winding (Lu, Lv, Lw) of the electric motor (42); and detect insulation deterioration of the winding (Lu, Lv, Lw) of the electric motor (42) based on at least one of comparison of at least one of an evaluated value of the impulse response, the resistance, or the inductance of the winding (Lu, Lv, Lw) of the electric motor (42) with a threshold value or comparison between at least one of a plurality of evaluated values, resistances, or inductances of the winding (Lu, Lv, Lw) of the electric motor (42). This aspect can improve accuracy of detection of insulation deterioration of the winding (Lu, Lv, Lw) of the electric motor (42).

A sixth aspect is a refrigeration cycle device (1) based on the fifth aspect. In this aspect, the detection circuit (32) is configured to measure at least one of the impulse response, the resistance, or the inductance of the winding (Lu, Lv, Lw) of the electric motor (42) by use of a power supply line (Pu, Pv, Pw) from the drive circuit (31) to the winding (Lu, Lv, Lw) of the electric motor (42). This aspect enables simplification of the configuration of the control device.

A seventh aspect is a refrigeration cycle device (1) based on the sixth aspect. In this aspect, the detection circuit (32) is placed on a same substrate (34) of the control circuit (33) or constitutes an integrated circuit (35) together with the control circuit (33). This aspect enables simplification of the configuration of the control device.

An eighth aspect is a refrigeration cycle device (1) based on any one of the first to seventh aspects. In this aspect, the ethylene-based fluoroolefin contains ethylene-based fluoroolefin likely to undergo a disproportionation reaction. This aspect enables suppression of a disproportionation reaction of the working medium (20).

Anineth aspect is a refrigeration cycle device (1) based on any one of the first to eighth aspects. In this aspect, the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene. This aspect enables suppression of a disproportionation reaction of the working medium (20).

A tenth aspect is a refrigeration cycle device (1) based on any one of the first to nineth aspects. In this aspect, the working medium (20) contains difluoromethane as the refrigerant component. This aspect enables suppression of a disproportionation reaction of the working medium (20).

An eleventh aspect is a refrigeration cycle device (1) based on any one of the first to tenth aspects. In this aspect, the working medium (20) further contains a saturated hydrocarbon. This aspect enables suppression of a disproportionation reaction of the working medium (20).

A twelfth aspect is a refrigeration cycle device (1) based on any one of the first to eleventh aspects. In this aspect, the working medium (20) contains a haloalkane with 1 or 2 carbon atoms as a disproportionation inhibitor for suppressing a disproportionation reaction of the ethylene-based fluoroolefin. This aspect enables suppression of a disproportionation reaction of the working medium (20).

A thirteenth aspect is a refrigeration cycle device (1) based on the eleventh aspect. In this aspect, the saturated hydrocarbon contains n-propane. This aspect enables suppression of a disproportionation reaction of the working medium (20).

The second to thirteenth aspects are optional and not essential.

### INDUSTRIAL APPLICABILITY

The present disclosure is applicable to refrigeration cycle devices. In particular, the present disclosure is applicable to a refrigeration cycle device using a working medium containing ethylene-based fluoroolefin as a refrigerant component.

### REFERENCE SIGNS LIST

1 Refrigeration Cycle Device
2 Refrigeration Cycle Circuit
20 Working Medium
3, 3A, 3B Control Device
31 Drive Circuit
32 Detection Circuit
33 Control Circuit
34 Substrate
35 Integrated Circuit
Pu, Pv, Pw Power Supply Line
4 Compressor
40 Sealed Container
41 Compression Mechanism
42 Electric Motor
Lu, Lv, Lw Winding
5 First Heat Exchanger (Condenser, Evaporator)
6 Expansion Valve
7 Second Heat Exchanger (Condenser, Evaporator)

## Claims

1. A refrigeration cycle device comprising:
a refrigeration cycle circuit including a compressor, a condenser, an expansion valve and an evaporator, and allowing circulation of a working medium; and
a control device configured to control the refrigeration cycle circuit,
the working medium containing ethylene-based fluoroolefin as a refrigerant component,
the compressor including
a sealed container constituting a fluidic pathway for the working medium,
a compression mechanism positioned inside the sealed container to compress the working medium, and
an electric motor positioned inside the sealed container to operate the compression mechanism, and
the control device including
a drive circuit configured to drive the electric motor,
a detection circuit configured to detect insulation deterioration of a winding of the electric motor, and
a control circuit having a first control mode for controlling the refrigeration cycle circuit under a first condition and a second control mode for controlling the refrigeration cycle circuit under a second condition lower in at least one of a maximum pressure or a highest temperature of the working medium at the compressor than the first condition, and configured to select the second control mode when the detection circuit has detected insulation deterioration of the winding of the electric motor.

2. The refrigeration cycle device according to claim 1, wherein:
the control circuit is configured to determine whether the detection circuit has detected insulation deterioration of the winding of the electric motor before the drive circuit operates the electric motor;
the control circuit is configured to
perform the first control mode when the detection circuit has not detected insulation deterioration of the winding of the electric motor, and
perform the second control mode when the detection circuit has detected insulation deterioration of the winding of the electric motor.

3. The refrigeration cycle device according to claim 1 or 2, wherein:
the second control mode controls the refrigeration cycle circuit to make a pressure of the working medium at the compressor be equal to or lower than a predetermined pressure and to make a temperature of the working medium at the compressor be equal to or lower than a predetermined temperature; and
the predetermined pressure and the predetermined temperature are set to prevent progress of a disproportionation reaction of the working medium even if a discharge phenomenon has occurred at the winding of the electric motor inside the sealed container.

4. The refrigeration cycle device according to claim 1 or 2, wherein:
the refrigeration cycle circuit includes a first heat exchanger configured to perform heat exchange between outdoor air and the working medium and a second heat exchanger configured to perform heat exchange between indoor air and the working medium;
the control circuit has functionality to perform a cooling operation to control the refrigeration cycle circuit so that the first heat exchanger functions as the condenser and the second heat exchanger functions as the evaporator, and to perform a heating operation to control the refrigeration cycle circuit so that the first heat exchanger functions as the evaporator and the second heat exchanger functions as the condenser; and
the second control mode stops an operation of the electric motor by the drive circuit when a temperature of the outdoor air exceeds an operation upper limit temperature in the cooling operation, or stops an operation of the electric motor by the drive circuit when a temperature of the outdoor air falls below an operation lower limit temperature in the heating operation.

5. The refrigeration cycle device according to any one of claims 1 to 4, wherein
the detection circuit is configured to:
measure at least one of an impulse response, a resistance, or an inductance of the winding of the electric motor; and
detect insulation deterioration of the winding of the electric motor based on at least one of comparison of at least one of an evaluated value of the impulse response, the resistance, or the inductance of the winding of the electric motor with a threshold value or comparison between at least one of a plurality of evaluated values, resistances, or inductances of the winding of the electric motor.

6. The refrigeration cycle device according to claim 5, wherein
the detection circuit is configured to measure at least one of the impulse response, the resistance, or the inductance of the winding of the electric motor by use of a power supply line from the drive circuit to the winding of the electric motor.

7. The refrigeration cycle device according to claim 6, wherein
the detection circuit is formed integrally with a same substrate of the control circuit or the control circuit.

8. The refrigeration cycle device according to any one of claims 1 to 7, wherein
the ethylene-based fluoroolefin contains ethylene-based fluoroolefin likely to undergo a disproportionation reaction.

9. The refrigeration cycle device according to any one of claims 1 to 8, wherein
the ethylene-based fluoroolefin is 1,1,2-trifluoroethylene, trans-1,2-difluoroethylene, cis-1,2-difluoroethylene, 1,1-difluoroethylene, tetrafluoroethylene, or monofluoroethylene.

10. The refrigeration cycle device according to any one of claims 1 to 9, wherein
the working medium contains difluoromethane as the refrigerant component.

11. The refrigeration cycle device according to any one of claims 1 to 10, wherein
the working medium further contains a saturated hydrocarbon.

12. The refrigeration cycle device according to any one of claims 1 to 11, wherein
the working medium contains a haloalkane with 1 or 2 carbon atoms as a disproportionation inhibitor for suppressing a disproportionation reaction of the ethylene-based fluoroolefin.

13. The refrigeration cycle device according to claim 11, wherein
the saturated hydrocarbon contains n-propane.
